# EUROPÄISCHE PATENTSCHRIFT

(11) **EP 1 308 678 B1**
(45) Veröffentlichungstag und Bekanntmachung des Hinweises auf die Patenterteilung: **28.05.2008**
(21) Anmeldenummer: 01811065.0
(22) Anmeldetag: 01.11.2001
(51) Int. Cl.: F24F 12/00, F24F 7/08, F28D 9/00

(54) **Lüftungseinrichtung**
Ventilation device
Dispositif de ventilation

(43) Veröffentlichungstag der Anmeldung: 07.05.2003
(73) Patentinhaber: FENSTERFABRIK ALBISRIEDEN AG, CH-8047 Zürich (CH)
(72) Erfinder: Palffy, Sandor, 5408 Ennetbaden (CH); Holliger, Christoph, 5706 Boniswil (CH)
(74) Vertreter: Wagner, Wolfgang Heribert

(56) Entgegenhaltungen:
- EP-A- 0 952 409
- DE-A- 3 347 028
- DE-A- 3 711 301
- DE-A- 19 753 986
- US-A- 5 000 253
- US-A- 5 829 513

## Beschreibung

### Technisches Gebiet

Die Erfindung betrifft eine Lüftungseinrichtung gemäss dem Oberbegriff des Anspruchs 1. Derartige Lüftungseinrichtungen gestatten es, Abluft aus einem geschlossenen Raum durch von aussen zugeführte Zuluft, die dabei mit der Abluft Wärme austauscht, zu ersetzen.

### Stand der Technik

Aus der DE-A-33 47 028 ist eine gattungsgemässe Lüftungseinrichtung bekannt, welche in einen Fensterrahmen integriert ist. Der Zuluftkanal und der Abluftkanal sind jeweils fast vollständig um das Fenster herumgeführt, über einen Teil des Umfangs als Doppelkanal, der an zwei Ecken des Fensterrahmens jeweils um 90° umgelenkt wird. Diese Anordnung benötigt viel Platz und ist praktisch nur in der beschriebenen Form, also mit Integration in einen Fensterrahmen o. dgl. einsetzbar. Die Länge des Doppelkanals und damit der Grad des erreichbaren Wärmeaustauschs ist wesentlich durch die Abmessungen des Fensterrahmens bestimmt. Die Strömung dürfte verhältnismässig wenig turbulent sein, so dass die Wärmeübertragung, jedenfalls wenn nicht zusätzliche Massnahmen getroffen, z. B. Wärmetauscherrippen vorgesehen werden, wegen der Bildung von Strömungsschichten eher gering bleibt.

Bei einer ähnlichen Lüftungseinrichtung gemäss DE-A-32 30 279 erstreckt sich der Doppelkanal nur über eine Seite des Fensterrahmens. Hier dürfte die Wärmeübertragung trotz Wärmetauscherrippen oder konzentrischer Führung des Zuluftkanals und des Abluftkanals verhältsmässig geringfügig bleiben.

In DE-A-34 26 778 ist eine Lüftungseinrichtung beschrieben, die ebenfalls z. B. in einen Holm eines Fensterrahmens eingebaut werden kann. Hier sind Zuluftkanal und Abluftkanal in durch Lamellen getrennte gerade Teilkanäle aufgeteilt, derart, dass sich Zuluft- und Abluftteilkanäle abwechseln. Daher ist der Aufbau der Vorrichtung verhältnismässig komplex. Je zahlreicher und schmäler die Teilkanäle im Sinne wirksamer Wärmeübertragung sind, desto höher ist ausserdem der Strömungswiderstand.

Aus der WO-A-96/12 145 ist eine grundsätzlich ähnliche Lüftungseinrichtung bekannt, bei welcher die Teilkanäle konzentrisch angeordnet und schraubenlinienförmig ausgebildet sind. Diese Lüftungseinrichtung dürfte die gleichen Nachteile haben wie die zuletzt genannte. Vor allem ist der Aufbau sehr komplex und die Herstellung dürfte entsprechend teuer sein.

DE-A-197 53 986 offenbart eine Lüftungseinrichtung gemäß dem Oberbegriff des Anspruchs 1.

### Darstellung der Erfindung

Der Erfindung liegt die Aufgabe zu Grunde, eine gattungsgemässe Lüftungseinrichtung anzugeben, die kompakt und einfach im Aufbau ist und einen guten Wirkungsgrad des Wärmetauschers aufweist. Diese Aufgabe wird durch die Merkmale im kennzeichnenden Teil des Anspruchs 1 gelöst.

Durch die Erfindung wird eine gattungsgemässe Lüftungseinrichtung geschaffen, welche ausserdem kompakt aufgebaut ist und deren Form und Abmessungen an verschiedene Randbedingungen angepasst werden können. Der Aufbau kann insbesondere so gestaltet werden, dass die Einrichtung modular aufgebaut, d. h. aus einfachen vorfabrizierten Teilen zusammensetzbar ist und aus Teilen gleicher Art Ausführungen verschiedener Grössen, insbesondere verschiedener Längen des Doppelkanals gebaut werden können. Der Wirkungsgrad des Wärmetauschers ist auch bei verhältnismässig kurzem Doppelkanal sehr hoch, da an den 180°-Umlenkungen allfällig in den geraden Strecken sich bildende Strömungsschichten abgelöst werden und Turbulenz erzeugt wird, so dass der Wärmeübergang über die gesamte Erstreckung des Doppelkanals hohe Werte annimmt. Ausserdem haben die Umlenkungen die Wirkung, dass sie den Einfluss allfälligen Winddrucks auf die Zuluftströmung sowie die Uebertragung von Schall über den Doppelkanal mindern.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: in schematischer perspektivischer Darstellung eine erfindungsgemässe Lüftungseinrichtung gemäss einer ersten Ausführungsform,
- Fig. 2: eine Seitenansicht der erfindungsgemässen Lüftungseinrichtung gemäss der ersten Ausführungsform, wobei die vorneliegende Seitenwand weggelassen ist,
- Fig. 3a: eine Frontansicht mit weggelassener Stirnwand, entsprechend einer Ansicht von links in Fig. 2,
- Fig. 3b: einen Schnitt längs B-B in Fig. 2,
- Fig. 3c: einen Schnitt längs C-C in Fig. 2,
- Fig. 3d: eine Frontansicht mit weggelassener Stirnwand, entsprechend einer Ansicht von rechts in Fig. 2,
- Fig. 4: eine Seitenansicht einer erfindungsgemässen Lüftungseinrichtung gemäss einer zweiten Ausführungsform, wobei die vorneliegende Seitenwand weggelassen ist,
- Fig. 5a: eine Frontansicht mit weggelassener Kappe, entsprechend einer Ansicht von links in Fig. 4,
- Fig. 5b: einen Schnitt längs B-B in Fig. 4,
- Fig. 5c: einen Schnitt längs C-C in Fig. 4,
- Fig. 5d: eine Frontansicht mit weggelassener Kappe, entsprechend einer Ansicht von rechts in Fig. 4 und
- Fig. 6: eine Draufsicht mit weggelassener Deckplatte.

### Wege zur Ausführung der Erfindung

Gemäss einer ersten Ausführungsform ist die erfindungsgemässe Lüftungseinrichtung quaderförmig ausgebildet mit zwei parallelen senkrechten Seitenwänden 1a,b, die durch zu denselben normale, ebenfalls senkrechte Stirnwände 2a,b verbunden sind. Zwischen einer waagrechten Grundplatte 3 und einer ebensolchen Deckplatte 4 sind zu denselben parallele Zwischenwände 5a-c in regelmässigen Abständen übereinander angeordnet. Jede der Zwischenwände 5a-c erstreckt sich von der Seitenwand 1a zur Seitenwand 1b und abwechselnd von der Stirnwand 2a bis nahe an die gegenüberliegende Stirnwand 2b - derart, dass dort ein Durchlass frei bleibt - und umgekehrt. Sie bildet dadurch einen serpentinenförmigen Doppelkanal mit geraden Strecken 6a-d von jeweils etwa quadratischem Querschnitt und an den Durchlässen angeordneten Umlenkungen 7a-c mit jeweils einem Umlenkwinkel von 180°, deren jede zwei unmittelbar aufeinanderfolgende gerade Strecken verbindet.

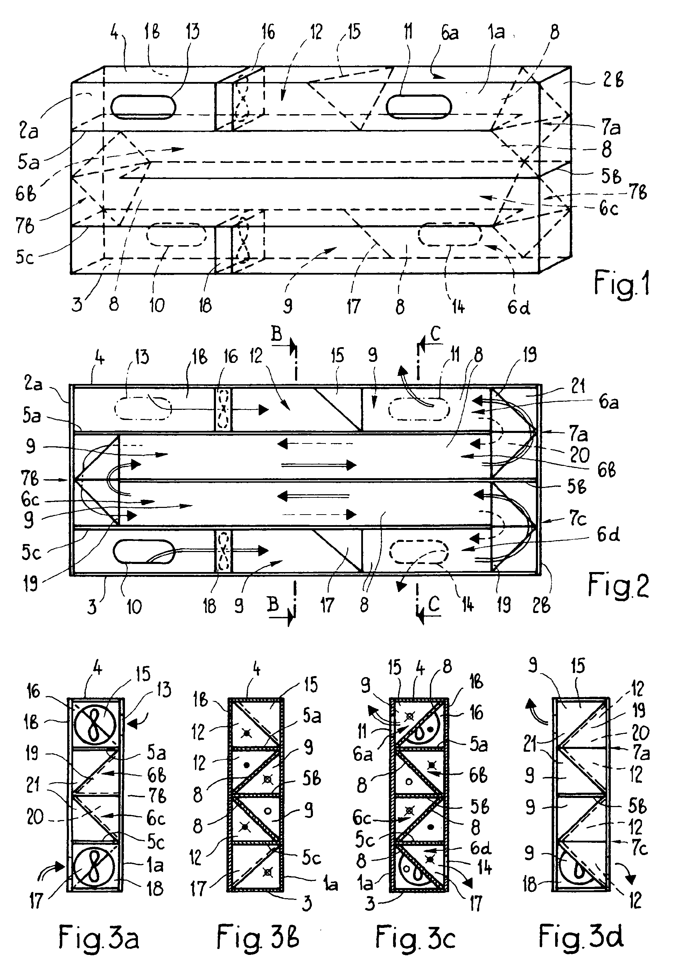

Jede der geraden Strecken 6a-d des Doppelkanals ist durch eine diagonale Trennwand 8, welche sich jeweils über deren ganze Länge erstreckt und nur die Umlenkungen freilässt, zweigeteilt, so dass sie in zwei Hälften jeweils dreieckigen Querschnitts geteilt sind. Die eine Hälfte gehört jeweils zu einem Zuluftkanal 9, der einen Zulufteinlass 10 mit einem Zuluftauslass 11 verbindet und die andere Hälfte zu einem Abluftkanal 12, der einen Ablufteinlass 13 mit einem Abluftauslass 14 verbindet. Der Zulufteinlass 10 und der Abluftauslass 14 durchbrechen links unten bzw. rechts unten die aussenseitige Seitenwand 1b, während der Zuluftauslass 11 und der Ablufteinlass 13 oben die raumseitige Seitenwand 1a durchbrechen (der Zuluftauslass 11 und der Ablufteinlass 13 sind auch in Fig. 2 angedeutet, obwohl die Seitenwand 1a weggelassen ist). Die Ein- und Auslässe können jeweils vergittert sein oder auch aus mehreren Schlitzen, vorzugsweise senkrecht zur Richtung des jeweiligen Kanals, bestehen. Die Trennwände 8 unmittelbar aufeinanderfolgender gerader Strecken sind gegensinnig geneigt. Sie sollten aus gut wärmeleitendem Material bestehen, dessen Oberflächen vorzugsweise zur Vergrösserung der Fläche und Erzeugung von Turbulenz strukturiert ist. Sehr geeignet ist insbesondere geripptes oder gewelltes dünnes Blech, vor allem Aluminiumblech.

Im von der Deckplatte 4 und der ersten Zwischenwand 5a begrenzten obersten Teil der Lüftungseinrichtung erstreckt sich die Trennwand 8 von rechts bis über den Zuluftauslass 11, wo eine geneigte dreieckige Abschlusswand 15 den Zuluftkanal 9 abschliesst, so dass sich der Abluftkanal 12 nach links erweitert, bis er den ganzen sonst vom Doppelkanal eingenommenen Querschnitt ausfüllt. In diesem Teil ist rechts vom Ablufteinlass 13 ein Abluftventilator 16 angeordnet.

Ganz entsprechend erstreckt sich im von der Grundplatte 3 und der dritten Zwischenwand 5c begrenzten untersten Teil der Lüftungseinrichtung die Trennwand 8 von rechts bis über den Abluftauslass 14, wo eine geneigte dreieckige Abschlusswand 17 den Abluftkanal 12 abschliesst, so dass sich der Zuluftkanal 9 nach links erweitert, bis er den ganzen sonst vom Doppelkanal eingenommenen Querschnitt ausfüllt. In diesem Teil ist rechts vom Zulufteinlass 9 ein Zuluftventilator 18 angeordnet. Die Lüftungseinrichtung kann z. B. an der aussenseitigen Seitenwand 1b Solarzellen aufweisen, die über eine Batterie die Ventilatoren speist. Andererseits ist auch ein Anschluss an das Stromnetz möglich. In jedem Fall können die Ventilatoren und damit die Stärke des Luftaustausches steuer- oder regelbar sein. Es ist dann natürlich auch möglich, z. B. zur Nachtauskühlung nur den Abluftventilator 16 laufen zu lassen. Im Normalbetrieb laufen beide Ventilatoren etwa mit gleicher Umdrehungszahl.

An der ersten Umlenkung 7a ist eine Umlenkwand 19 angeordnet, die jeweils die beiden Kanalabschnitte der dort verbundenen geraden Strecken des Doppelkanals, die der Zwischenwand 5a benachbart sind und die beiden verbleibenden Kanalabschnitte jeweils miteinander verbindet. Die Umlenkwand 19 umfasst dazu jeweils zwei dreieckige Abschnitte, die jeweils mit einer Seite an das Ende einer der mit der Zwischenwand 5a bündig abschliessenden Trennwände 8 und mit einer weiteren Seite an die Seitenwand 1b anschliessen, während die verbleibenden Seiten der beiden dreieckigen Abschnitte aneinander anschliessen.

Sie bilden so einen längs einer Diagonalebene abgeschnittenen halben Mantel einer quadratischen Pyramide, dessen Basisseiten an die Enden der Trennwände 8 anschliessen, während die Mantelseiten an der Seitenwand 1b anliegen. Die Spitze der besagten halben Pyramide stösst an die Innenseite der Stirnwand 2b. Die Umlenkwand 19 trennt somit einen inneren Durchgang 20, der die an der Zwischenwand 6a anliegenden Abschnitte des Abluftkanals 12 verbindet, von einem äusseren Durchgang 21, der die entsprechenden Abschnitte des Zuluftkanals 9 miteinander verbindet. Die Umlenkwand 19 kann aus dem gleichen Material bestehen wie die Trennwände 8. Sie kann ganz oder jeweils teilweise mit einer derselben oder auch beiden einstückig sein. Vorzugsweise ist sie ein separates Bauteil. Die Umlenkung 7a ist vorzugsweise scharfkantig ausgebildet.

Die dritte Umlenkung 7c entspricht genau der ersten Umlenkung 7a. Die zweite Umlenkung 7b entspricht einer Drehung der ersten Umlenkung 7a um 180°, d. h. die Umlenkwand 19 liegt an der Seitenwand 1a an. Der Zuluftkanal 9 liegt innen und der Abluftkanal 12 aussen.

Der Abluftkanal 12 nimmt im Bereich des Ablufteinlasses 13 und des Abluftventilators 16 den ganzen Querschnitt zwischen der Deckplatte 3, der Zwischenwand 5a und den Seitenwänden 1a, 1b ein. Dann wird er in Strömungsrichtung durch die Abschlusswand 15 stetig verengt, bis er nur noch die (in Fig. 1, 2) hinten unten liegende Hälfte der ersten geraden Strecke 6a des Doppelkanals einnimmt, während die vorn oben liegende Hälfte vom den Zuluftauslass 11 umgebenden Bereich des Zuluftkanals 9 eingenommen wird. An der ersten Umlenkung 7a wird der Abluftkanal 9 um 180° umgelenkt. Er ist durch den inneren Durchgang 20 mit der hinten oben liegende Hälfte der zweiten geraden Strecke 6b des Doppelkanals verbunden, durch den er sich bis zur zweiten Umlenkung 7b fortsetzt. Dort ist er über den äusseren Durchgang 21 mit der hinten unten liegenden Hälfte der dritten geraden Strecke 6c des Doppelkanals verbunden, durch welchen er sich bis zur dritten Umlenkung 7c fortsetzt, wo er schliesslich, wiederum durch den inneren Durchgang 20, mit der hinten oben liegenden Hälfte der vierten und letzten geraden Strecke 6d des Doppelkanals verbunden ist. Letztere ist links vom Abluftauslass 14 von der Abschlusswand 17 abgeschlossen. Der Abluftkanal 12 liegt also immer hinten und grenzt somit stets an die aussenseitige Seitenwand 1b.

Der Zuluftkanal 9 verläuft völlig analog vom Zulufteinlass 10 zum Zuluftauslass 11, wobei er jeweils die komplementären Hälften der geraden Strecken 6d-a des Doppelkanals und die komplementären Durchgänge der Umlenkungen 7c-a einnimmt. Er liegt immer vorn und grenzt somit stets an die raumseitige Seitenwand 1a.

Der Abluftstrom ist in den Figuren durch einen einfachen Pfeil dargestellt und dort, wo die Strömungsrichtung normal zur Bildebene ist, durch einen Punkt, der dort, wo die Strömungsrichtung mit der Blickrichtung übereinstimmt, von einem Kreuz überlagert ist. Der Zuluftstrom ist in analoger Weise durch einen Doppelpfeil bzw. durch einen Kreis dargestellt. Zuluftstrom und Abluftstrom sind gegenläufig und über die ganze Länge des Doppelkanals lediglich durch die dünnen, gut wärmeleitenden Trennwände 8 und Umlenkwände 19 getrennt. Zusammen mit der durch die scharfkantigen 180°-Umlenkungen geförderten Turbulenz beider Ströme ergibt sich daraus ein äusserst wirksamer Wärmeübergang von der Abluft an die Zuluft oder, bei gekühltem Raum, von der Zuluft an die Abluft, so dass sich die Temperatur der Zuluft vor deren Austritt durch den Zuluftauslass 11 der Raumtemperatur schon stark angenähert hat. Dadurch kann beim Heizen wie beim Kühlen Energie eingespart werden. Ausserdem ist das Problem die Behaglichkeit störender kalter Zugluftströmungen bei geheiztem Raum entschärft.

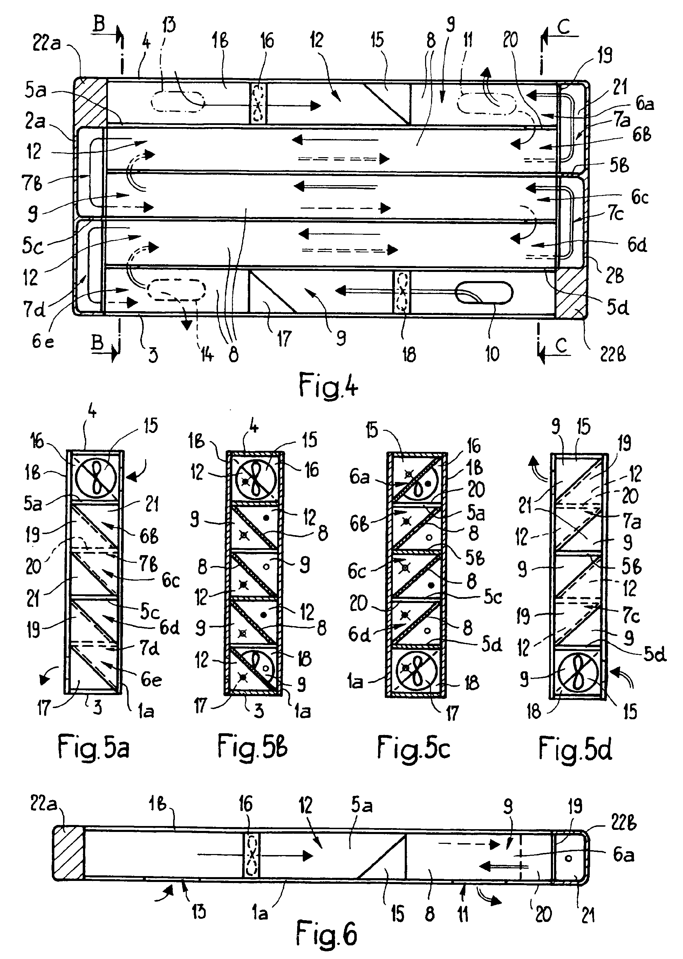

Die Lüftungseinrichtung gemäss einer in Figuren 4, 5a-d, 6 dargestellten zweiten Ausführungsform entspricht in ihrem grundsätzlichen Aufbau der Lüftungseinrichtung gemäss der ersten Ausführungsform. Die wiederum quaderförmige Lüftungseinrichtung mit Seitenwänden 1a,b, Stirnwänden 2a,b, Grundplatte 3 und Deckplatte 4 enthält Zwischenwände 5a-d, welche gerade Strecken 6a-e des Doppelkanals voneinander tennen und die durch Umlenkungen 7a-d, wiederum mit einem Umlenkwinkel von 180°, verbunden sind.

Dagegen sind die Trennwände 8 sämtlicher gerader Strecken 6a-e des Doppelkanals gleichsinnig nach hinten (Fig. 4) geneigt. Der Zuluftkanal 9 und der Abluftkanal 12 liegen abwechselnd vorn und hinten, also ein Mal an die raumseitige Seitenwand 1a, ein Mal an die aussenseitige Seitenwand 1b angrenzend. Dementsprechend sind auch die Umlenkungen 7a-d anders ausgebildet.

Die erste Umlenkung 7a umfasst eine Umlenkwand 19, welche parallelogrammförmig ausgebildet ist und parallel zur Stirnwand 1b mit Abstand vor derselben angeordnet ist, derart, dass die schrägen Seiten der Umlenkwand 19 an die Ränder der Trennwände 8 der ersten geraden Strecke 6a und der zweiten geraden Strecke 6b des Doppelkanals anschliessen, während die verbleibenden senkrechten Seiten an den Seitenwänden 1a, 1b anliegen. Da die Trennwand 5a nicht bis zur Umlenkwand 19 durchgezogen ist, bleibt zwischen der letzteren und dem Ende der Trennwand 5a ein innerer Durchgang 20 frei, der die an die Trennwand 5a angrenzenden Hälften der ersten geraden Strecke 6a und der zweiten geraden Strecke 6b des Doppelkanals miteinander verbindet. Durch die Umlenkwand 19 davon getrennt liegt zwischen derselben und der Stirnwand 2b ein äusserer Durchgang 21, der die verbleibenden Hälften der ersten geraden Strecke 6a und der zweiten geraden Strecke 6b des Doppelkanals miteinander verbindet.

Die Stirnwände 2a,b sind jeweils Teil einer abnehmbaren Kappe 22a bzw. 22b, welche auch an die jeweilige Stirnwand 2a oder 2b anschliessende, bis zur jeweiligen Umlenkwand 19 reichende Abschnitte der Seitenwände 1a,b, der Grundplatte 3, der Deckplatte 4 und der Zwischenwände 5a,c bzw. 5b,d umfasst. Die Umlenkwände 19 können jeweils Teil der Kappen 22a,b sein oder auch wie dargestellt am Mittelteil der Lüftungseinrichtung verankert sein. Ein entsprechender Aufbau kann mit geringfügigen Aenderungen auch bei der Lüftungseinrichtung gemäss der ersten Ausführungsform verwirklicht werden. Die Ausbildung erleichtert wegen der Abnehmbarkeit der Kappen die Reinigung und Wartung der Lüftungseinrichtung.

Die Funktionsweise entspricht genau der im Zusammenhang mit der Lüftungseinrichtung gemäss der ersten Ausführungsform beschriebenen. Es liegt auf der Hand, dass bei beiden Ausführungsformen die Länge des Doppelkanals leicht und unter Verwendung gleichartiger Bauteile an Bedürfnisse und Gegebenheiten anpassbar sind, z. B. ist eine Verlängerung durch Verdoppelung des aus der zweiten geraden Strecke 6b und der dritten geraden Strecke 6c bestehenden Abschnitts desselben möglich.

Die Grundplatte 3, Deckplatte 4, Seitenwände 1a,b, Stirnwände 2a,b und Zwischenwände 5a-c bzw. 5a-d der Lüftungseinrichtung gemäss der ersten wie der zweiten Ausführungsform können z. B. aus Holz oder Pressspanmaterial oder aus Kunststoff oder einer Verbindung dieser Materialien bestehen, welche sowohl eine gute Wärme- und auch Schallisolation gewährleisten. In den Zuluftkanal können Filter, Pollenkontrolle oder auch Duftstoffpatronen eingebaut sein.

Statt wie in den Ausführungsbeispielen dargestellt in einer Ebene können die Doppelkanäle auch z. B. in zwei aneinander anschliessenden Ebenen angeordnet sein, die miteinander einen Winkel, insbesondere einen rechten Winkel einschliessen, so dass die Lüftungseinrichtung eine in der Frontansicht L-förmige Konfiguration bildet.

Die erfindungsgemässe Lüftungseinrichtung eignet sich besonders zum Einbau in Fenster. Dabei kann sie statt oder hinter einer Scheibe in einem Flügelrahmen befestigt sein oder auch unmittelbar im Blendrahmen, wo sie dann einen Fensterflügel oder einen Teil eines solchen ersetzt. Ihre räumliche Orientierung kann natürlich von der in den Ausführungsbeispielen dargestellten abweichen.

### Bezugszeichenliste

- 1a,b: Seitenwände
- 2a,b: Stirnwände
- 3: Grundplatte
- 4: Deckplatte
- 5a,b,c,d: Zwischenwände
- 6a,b,c,d,e: gerade Strecken des Doppelkanals
- 7a,b,c,d: Umlenkungen
- 8: Trennwand
- 9: Zuluftkanal
- 10: Zulufteinlass
- 11: Zuluftauslass
- 12: Abluftkanal
- 13: Ablufteinlass
- 14: Abluftauslass
- 15: Abschlusswand
- 16: Abluftventilator
- 17: Abschlusswand
- 18: Zuluftventilator
- 19: Umlenkwand
- 20: innerer Durchlass
- 21: äusserer Durchlass
- 22a,b: Kappen

## Patentansprüche

1. Lüftungseinrichtung mit einem einfachen Zuluftkanal (9), der einen Zulufteinlass (10) mit einem Zuluftauslass (11) verbindet und einem einfachen Abluftkanal (12), der einen Ablufteinlass (13) mit einem Abluftauslass (14) verbindet, wobei ein Abschnitt des Zuluftkanals (9) und ein Abschnitt des Abluftkanals (12) einen Wärmetauscher bilden, in welchem sie gegengleich in wärmeleitender Verbindung als Doppelkanal geführt sind und der mehrere aufeinanderfolgende gerade Strecken (6a, 6b, 6c, 6d, 6e) umfasst, wobei unmittelbar aufeinanderfolgende gerade Strecken (6a, 6b, 6c, 6d, 6e) jeweils durch Umlenkungen (7a, 7b, 7c, 7d) mit einem Umlenkwinkel von 180° verbunden sind, **dadurch gekennzeichnet, dass** an den geraden Strecken (6a, 6b, 6c, 6d, 6e) des Doppelkanals der Zuluftkanal (9) und der Abluftkanal (12) jeweils nebeneinander angeordnet und durch eine in Längsrichtung durchgehende Trennwand (8) getrennt sind und unmittelbar aufeinanderfolgende gerade Strecken (6a, 6b, 6c, 6d, 6e) seitlich unmittelbar aneinander anschliessen.

2. Lüftungseinrichtung nach Anspruch 1, **dadurch gekennzeichnet, dass** die geraden Strecken (6a, 6b, 6c, 6d, 6e) des Doppelkanals in einer Ebene angeordnet sind.

3. Lüftungseinrichtung nach Anspruch 1 oder 2, **dadurch gekennzeichnet, dass** der Doppelkanal an den geraden Strecken (6a, 6b, 6c, 6d, 6e) etwa rechteckigen Querschnitt aufweist.

4. Lüftungseinrichtung nach den Ansprüchen 1 bis 3, **dadurch gekennzeichnet, dass** sie im wesentlichen quaderförmig ist mit zwei parallelen Seitenwänden (1a, 1b), welche den Doppelkanal seitlich begrenzen und zwei die Seitenwände (1a, 1b) verbindenden parallelen Stirnwänden (2a, 2b) sowie mehreren zu den Seitenwänden (1a, 1b) und den Stirnwänden (2a, 2b) normalen, unmittelbar aufeinanderfolgende gerade Strecken (6a, 6b, 6c, 6d, 6e) des Doppelkanals voneinander trennenden Zwischenwänden (5a, 5b, 5c, 5d), deren jede seitlich an beide Seitenwände (1a, 1b) anschliesst und stirnseitig an eine der Stirnwände (2a; 2b), während an der anderen Stirnwand (2b; 2a) zur Herstellung einer Umlenkung (7a, 7b, 7c, 7d) ein Durchlass freibleibt.

5. Lüftungseinrichtung nach Anspruch 4, **dadurch gekennzeichnet, dass** entweder die entsprechenden Abschnitte des Zuluftkanals (9) oder des Abluftkanals (12) unmittelbar aufeinanderfolgender gerader Strecken (6a, 6b, 6c, 6d, 6e) des Doppelkanals jeweils, durch die Zwischenwand (5a, 5b, 5c, 5d) getrennt, benachbart sind.

6. Lüftungseinrichtung nach einem der Ansprüche 3 oder 4 und Anspruch 5, **dadurch gekennzeichnet, dass** die Trennwand (8) jeweils diagonal im Doppelkanal angeordnet ist.

7. Lüftungseinrichtung nach Anspruch 6, **dadurch gekennzeichnet, dass** die Trennwände (8) unmittelbar aufeinanderfolgender gerader Strecken (6a, 6b, 6c, 6d) des Doppelkanals jeweils gegensinnig geneigt sind.

8. Lüftungseinrichtung nach den Ansprüchen 5 und 7, **dadurch gekennzeichnet, dass** die Umlenkung (7a, 7b, 7c) jeweils zur Verbindung der benachbarten Kanalabschnitte der dort verbundenen geraden Strecken (6a, 6b, 6c, 6d) des Doppelkanals eine Umlenkwand (19) mit zwei dreieckigen Abschnitten umfasst, die jeweils mit einer Seite an das Ende einer der mit der Zwischenwand (5a, 5b, 5c) bündig abschliessenden Trennwände (8) und mit einer weiteren Seite an eine Seitenwand (1a, 1b) anschliessen, während die verbleibenden Seiten der beiden dreieckigen Abschnitte aneinander anschliessen, so dass sie einen die benachbarten Kanalabschnitte verbindenden inneren Durchlass (20) am Ende der Zwischenwand (5a, 5b, 5c) von einem die verbleibenden Kanalabschnitte der besagten geraden Strecken (6a, 6b, 6c, 6d, 6e) des Doppelkanals verbindenden äusseren Durchlass (21) trennen, welcher zwischen der Umlenkwand (19) und der Stirnwand (2a, 2b) liegt.

9. Lüftungseinrichtung nach Anspruch 6, **dadurch gekennzeichnet, dass** die Trennwände (8) unmittelbar aufeinanderfolgender gerader Strecken (6a, 6b, 6c, 6d, 6e) gleichsinnig geneigt sind.

10. Lüftungseinrichtung nach Anspruch 9, **dadurch gekennzeichnet, dass** die Umlenkung (7a, 7b, 7c, 7d) jeweils zur Verbindung der benachbarten Kanalabschnitte der dort verbundenen geraden Strecken des Doppelkanals eine zur Stirnwand (2a, 2b) parallele, von ihr beabstandete parallelogrammförmige Umlenkwand (19) umfasst, deren Seiten an die Enden der Trennwände (8) sowie an die Seitenwände (1a, 1b) anschliessen, während das Ende der Zwischenwand (5a, 5b, 5c, 5d) von ihr beabstandet ist, so dass sie einen die benachbarten Kanalabschnitte verbindenden inneren Durchlass (20) von einem die verbleibenden Kanalabschnitte der besagten geraden Strecken (6a, 6b, 6c, 6d, 6e) des Doppelkanals verbindenden äusseren Durchlass (21) trennt, der zwischen der Umlenkwand (19) und der Stirnwand (2a, 2b) liegt.

11. Lüftungseinrichtung nach Anspruch 8 oder 10, **dadurch gekennzeichnet, dass** die die äusseren Durchgänge (21) begrenzenden Stirnwände (2a, 2b) und an dieselben anschliessende Abschnitte der Grundplatte (3), der Deckplatte (4), der Seitenwände (1a, b) und der Zwischenwände (5a, 5b, 5c, 5d) von abnehmbaren Kappen (22a, 22b) gebildet werden.

12. Lüftungseinrichtung nach einem der Ansprüche 4 bis 11, **dadurch gekennzeichnet, dass** die Seitenwände (1a, 1b) die Stirnwände (2a, 2b) und die Zwischenwände (5a, 5b, 5c, 5d) aus Holz oder Kunststoff bestehen.

13. Lüftungseinrichtung nach einem der Ansprüche 1 bis 12, **dadurch gekennzeichnet, dass** die Trennwände (8) jeweils aus Blech, vorzugsweise aus strukturiertem Aluminiumblech bestehen.

## Claims

1. Ventilation device comprising a simple incoming air duct (9), which connects an incoming air inlet (10) to an incoming air outlet (11), and a simple exhaust air duct (12), which connects an exhaust air inlet (13) to an exhaust air outlet (14), a segment of the incoming air duct (9) and a segment of the exhaust air duct (12) forming a heat exchanger in which they are led in the form of a double duct with opposite flows in a heat-conducting connection and which comprises a plurality of successive straight sections (6a, 6b, 6c, 6d, 6e), with directly successive straight sections (6a, 6b, 6c, 6d, 6e) being in each case connected by deflections (7a, 7b, 7c, 7d) having a deflection angle of 180°, **characterized in that,** in the straight sections (6a, 6b, 6c, 6d, 6e) of the double duct, the incoming air duct (9) and the exhaust air duct (12) are arranged side by side, separated by a partition (8) which is continuous in the longitudinal direction, and directly successive straight sections (6a, 6b, 6c, 6d, 6e) are laterally directly adjacent to one another.

2. Ventilation device according to Claim 1, **characterized in that** the straight sections (6a, 6b, 6c, 6d, 6e) of the double duct are arranged in a plane.

3. Ventilation device according to Claim 1 or 2, **characterized in that** the double duct has an approximately rectangular cross-section in the straight sections (6a, 6b, 6c, 6d, 6e).

4. Ventilation device according to any of Claims 1 to 3, **characterized in that** it is substantially right parallelepipedic with two parallel sidewalls (1a, 1b), which bound the double duct laterally, and two parallel end walls (2a, 2b) connecting the side walls (1a, 1b), and a plurality of intermediate walls (5a, 5b, 5c, 5d) which are normal to the side walls (1a, 1b) and the end walls (2a, 2b) and separate directly successive straight sections (6a, 6b, 6c, 6d) of the double duct from one another and each of which is adjacent laterally to both side walls (1a, 1b) and at the end to one of the side walls (2a; 2b), while a passage is left at the other end wall (2b; 2a) for the production of a deflection (7a, 7b, 7c, 7d).

5. Ventilation device according to Claim 4, **characterized in that** either the corresponding segments of the incoming air duct (9) or of the exhaust air duct (12) of directly successive straight sections (6a, 6b, 6c, 6d, 6e) of the double duct are each adjacent and are separated by the intermediate wall (5a, 5b, 5c, 5d).

6. Ventilation device according to Claim 3 or 4 and to Claim 5, **characterized in that** the partition (8) is arranged in each case diagonally in the double duct.

7. Ventilation device according to Claim 6, **characterized in that** the partitions (8) of directly successive straight sections (6a, 6b, 6c, 6d) of the double duct are in each case inclined in opposite directions.

8. Ventilation device according to Claims 5 and 7, **characterized in that**, for connecting the adjacent duct segments of the straight sections (6a, 6b, 6c, 6d) of the double duct which are connected thereto, the deflection (7a, 7b, 7c) comprises in each case a deflecting wall (19) having two triangular segments which are each adjacent at one side to the end of one of the partitions (8) flush with the intermediate wall (5a, 5b, 5c) and at a further side to a side wall (1a, 1b), while the remaining sides of the two triangular segments are adjacent to one another so that they separate an inner passage (20) connecting the adjacent duct segments, at the end of the intermediate wall (5a, 5b, 5c), from an outer passage (21) which connects the remaining duct segments of said straight sections (6a, 6b, 6c, 6d, 6e) of the double duct and is located between the deflecting wall (19) and the end wall (2a, 2b).

9. Ventilation device according to Claim 6, **characterized in that** the partitions (8) of directly successive straight sections (6a, 6b, 6c, 6d, 6e) are inclined in the same direction.

10. Ventilation device according to Claim 9, **characterized in that**, for connecting the adjacent duct segments of the sections of the double duct which are connected there, the deflection (7a, 7b, 7c, 7d) comprises a deflecting wall (19) which is parallel to the end wall (2a, 2b) and a distance away from it and is in the shape of a parallelogram and whose sides are adjacent to the ends of the partitions (8) and to the side walls (1a, 1b), while the end of the intermediate wall (5a, 5b, 5c, 5d) is a distance away from it so that it separates an inner passage (20) connecting the adjacent duct segments from an outer passage (21) which connects the remaining duct segments of said straight sections (6a, 6b, 6c, 6d, 6e) of the double duct and is located between the deflecting wall (19) and the end wall (2a, 2b).

11. Ventilation device according to Claim 8 or 10, **characterized in that** the end walls (2a, 2b) bounding the outer passages (21), and those segments of the baseplate (3), of the cover plate (4), of the side walls (1a, 1b) and of the intermediate walls (5a, 5b, 5c, 5d) which are adjacent to said end walls, are formed by removable caps (22a, 22b).

12. Ventilation device according to any of Claims 4 to 11, **characterized in that** the side walls (1a, 1b), the end walls (2a, 2b) and the intermediate walls (5a, 5b, 5c, 5d) consist of wood or plastic.

13. Ventilation device according to any of Claims 1 to 12, **characterized in that** the partitions (8) each consist of sheet metal, preferably of structured aluminium sheet.

## Revendications

1. Dispositif de ventilation comportant un canal d'air entrant simple (9), qui relie une admission d'air entrant (10) à une évacuation d'air entrant (11), et un canal d'air sortant simple (12), qui relie une admission d'air sortant (13) à une évacuation d'air sortant (14), une partie du canal d'air entrant (9) et une partie du canal d'air sortant (12) formant un échangeur de chaleur, dans lequel elles passent dans des directions opposées comme un canal double en formant une liaison conductrice de chaleur, et lequel comprend plusieurs sections droites (6a, 6b, 6c, 6d, 6e) se suivant les unes les autres, des sections droites (6a, 6b, 6c, 6d, 6e) se suivant directement les unes les autres étant respectivement reliées par des déviations (7a, 7b, 7c, 7d) avec un angle de déviation de 180°, **caractérisé en ce que** sur les sections droites (6a, 6b, 6c, 6d, 6e) du canal double, le canal d'air entrant (9) et le canal d'air sortant (12) sont respectivement disposés l'un à côté de l'autre et séparés par une paroi de séparation (8) traversante dans la direction longitudinale et des sections droites (6a, 6b, 6c, 6d, 6e) se suivant directement les unes les autres se raccordent latéralement directement les unes aux autres.

2. Dispositif de ventilation selon la revendication 1, **caractérisé en ce que** les sections droites (6a, 6b, 6c, 6d, 6e) du canal double sont disposées dans un plan.

3. Dispositif de ventilation selon la revendication 1 ou 2, **caractérisé en ce que** le canal double présente sur les sections droites (6a, 6b, 6c, 6d, 6e) une section transversale approximativement rectangulaire.

4. Dispositif de ventilation selon les revendications 1 à 3, **caractérisé en ce qu'**il est essentiellement parallélépipédique avec deux parois latérales parallèles (1a,1b), lesquelles délimitent latéralement le canal double, et deux parois frontales (2a,2b) parallèles reliant les parois latérales (1a,1b) ainsi que plusieurs parois intermédiaires (5a, 5b, 5c, 5d) séparant les unes des autres des sections droites (6a, 6b, 6c, 6d, 6e) du canal double se suivant directement les unes les autres, normales aux parois latérales (1a, 1b) et aux parois frontales (2a, 2b), dont chacune se raccorde latéralement aux deux parois latérales (1a, 1b) et du côté frontal à une des parois frontales (2a; 2b), tandis que sur l'autre paroi frontale (2b; 2a) un passage est ménagé afin de produire une déviation (7a, 7b, 7c, 7d).

5. Dispositif de ventilation selon la revendication 4, **caractérisé en ce que** les parties correspondantes soit du canal d'air entrant (9), soit du canal d'air sortant (12) des sections droites (6a, 6b, 6c, 6d, 6e) du canal double se suivant directement les unes les autres sont respectivement voisines, tout en étant séparées par la paroi intermédiaire (5a, 5b, 5c, 5d).

6. Dispositif de ventilation selon l'une des revendications 3 ou 4 et la revendication 5, **caractérisé en ce que** la paroi de séparation (8) est respectivement disposée en diagonale dans le canal double.

7. Dispositif de ventilation selon la revendication 6, **caractérisé en ce que** les parois de séparation (8) des sections droites (6a, 6b, 6c, 6d) du canal double se suivant directement les unes les autres sont respectivement inclinées en sens contraire.

8. Dispositif de ventilation selon les revendications 5 et 7, **caractérisé en ce que** la déviation (7a, 7b, 7c) comprend, pour relier respectivement les parties de canal voisines des sections droites (6a, 6b, 6c, 6d) du canal double qui sont reliées à cet endroit, une paroi de déviation (19) comportant deux parties triangulaires, qui se raccordent respectivement d'un côté à l'extrémité d'une des parois de séparation (8) se terminant à fleur de la paroi intermédiaire (5a, 5b, 5c) et d'un autre côté à une paroi latérale (1a, 1b), tandis que les côtés restants des deux parties triangulaires se raccordent les uns aux autres, de sorte qu'ils séparent un passage interne (20) reliant les parties de canal voisines à l'extrémité de la paroi intermédiaire (5a, 5b, 5c) d'un passage externe (21) reliant les parties de canal restantes desdites sections droites (6a, 6b, 6c, 6d, 6e) du canal double, lequel est situé entre la paroi de déviation (19) et la paroi frontale (2a, 2b).

9. Dispositif de ventilation selon la revendication 6, **caractérisé en ce que** les parois de séparation (8) des sections droites (6a, 6b, 6c, 6d, 6e) se suivant directement les unes les autres sont inclinées dans le même sens.

10. Dispositif de ventilation selon la revendication 9, **caractérisé en ce que** la déviation (7a, 7b, 7c, 7d) comprend, pour relier respectivement les parties de canal voisines des sections droites du canal double qui sont reliées à cet endroit, une paroi de déviation (19) en forme de parallélogramme, parallèle à la paroi frontale (2a, 2b), espacée de celle-ci, dont les côtés se raccordent aux extrémités des parois de séparation (8) ainsi qu'aux parois latérales (1a, 1b), tandis que l'extrémité de la paroi intermédiaire (5a, 5b, 5c, 5d) est espacée de celle-ci, de sorte qu'elle sépare un passage interne (20) reliant les parties de canal voisines d'un passage externe (21) reliant les parties de canal restantes desdites sections droites (6a, 6b, 6c, 6d, 6e) du canal double, ledit passage externe étant situé entre la paroi de déviation (19) et la paroi frontale (2a, 2b).

11. Dispositif de ventilation selon la revendication 8 ou 10, **caractérisé en ce que** les parois frontales (2a, 2b) délimitant les passages externes (21) et des parties se raccordant à celles-ci de la plaque de base (3), de la plaque de couvercle (4), des parois latérales (1a, 1b) et des parois intermédiaires (5a, 5b, 5c, 5d) sont formées par des capuchons (22a, 22b) amovibles.

12. Dispositif de ventilation selon l'une des revendications 4 à 11, **caractérisé en ce que** les parois latérales (1a, 1b), les parois frontales (2a, 2b) et les parois intermédiaires (5a, 5b, 5c, 5d) sont constituées de bois ou de matière plastique.

13. Dispositif de ventilation selon l'une des revendications 1 à 12, **caractérisé en ce que** les parois de séparation (8) sont respectivement constituées de tôle, de préférence de tôle d'aluminium structurée.
